# EUROPÄISCHE PATENTSCHRIFT

(11) **EP 3 003 622 B1**
(45) Veröffentlichungstag und Bekanntmachung des Hinweises auf die Patenterteilung: **02.05.2018**
(21) Anmeldenummer: 14729200.7
(22) Anmeldetag: 28.05.2014
(51) Int. Cl.: B23D 19/06, B26D 7/26, B26D 1/24

(54) **SCHERE**
SHEAR
CISAILLE

(30) Priorität: 31.05.2013 CH 10432013
(43) Veröffentlichungstag der Anmeldung: 13.04.2016
(73) Patentinhaber: Can Man AG, 5705 Hallwill (CH)
(72) Erfinder: UMBRICHT, Ruedi, CH-5722 Gränichen (CH); WIRZ, MARCO, CH-5057 Reitnau (CH)
(74) Vertreter: Gachnang, Hans Rudolf
(86) Internationale Anmeldenummer: PCT/CH2014/000073
(87) Internationale Veröffentlichungsnummer: WO 2014/190446

(56) Entgegenhaltungen:
- EP-A1- 0 600 049
- WO-A1-03/039795
- WO-A1-2009/104540
- CA-A1- 1 147 642
- DE-A1- 2 718 777
- US-A- 3 707 424

## Beschreibung

Gegenstand der Erfindung ist eine Schere gemäss Oberbegriff des Patentanspruchs 1.

Für die Herstellung von Blechzuschnitten, zum Beispiel für die Anfertigung von Blechgebinden wie Konserven- oder Getränkedosen, deren Rumpf durch eine Schweissnaht hergestellt wird, oder für andere technische Artikel aus Blech, dienen Scheren. Diese schneiden aus einer grossen Blechplatte mittels Rollmessern Streifen, deren Breite entweder der Länge oder der Breite des Blechzuschnitts entspricht. Durch eine zweite Schere werden die auf der ersten angefertigten Blechstreifen quer in die erforderliche Grösse zugeschnitten.

Die bekannten Scheren, auch Rollscheren genannt, umfassen zwei Rollmesser, deren Achsen parallel beabstandet zueinander liegen und bei denen die aus Hartmetall oder mit Hartmetall beschichteten Schneidringe, zwischen denen das Blech hindurchgeführt wird, letzteres durch eine Scherung trennen. Der Antrieb mindestens eines der beiden Rollmesser erfolgt üblicherweise über ein Zahnradgetriebe, bei dem koaxial zum Rollmesser nebst dem Schneidring und einem Transportring ein Zahnrad befestigt ist. In dieses Zahnrad greift ein Antriebszahnrad ein, welches über- bzw. unterhalb des Rollmessers angeordnet ist. Jedes Rollmesser ist zusammen mit dem Transportring und dem Antriebszahnrad auf einem Lagerbock fliegend gelagert. Der Durchmesser der Rollmesser ist üblicherweise ca. 70 mm. Dies bewirkt, dass nur Wälzlager mit entsprechend geringerem Durchmesser als Messerlager eingesetzt werden können und die verhältnismässig hohen Kräfte, die beim Schneiden der Bleche auftreten, aufnehmen müssen. Zudem haben Rollmesser mit einem Durchmesser von nur 70 mm den Nachteil, dass deren Geometrie gegenüber Rollmessern mit einem wesentlich grösseren Durchmesser als 70 mm bessere Schneideigenschaften aufweisen. Dies führt oft zu sogenannten Bogenschnitten, das heisst die Schnittkante entlang der zugeschnittenen Streifen oder Zuschnitte verläuft nicht exakt geradlinig. Ein weiterer Nachteil der bekannten Rollschere besteht darin, dass das Umrüsten bei einem Formatwechsel der Blechzuschnitte zeitlich aufwendig ist und eine umfangreiche Justierarbeit zur Folge hat.

Scheren der oben beschriebenen Gattung sind beispielsweise aus der EP 0 600 049 B1 bekannt. Bei der dort beschriebenen Rollschneideinheit sind die beiden Rollmesser in fester Relation zueinander in einem gemeinsamen Rahmen 5 gelagert. Die Rollmesser werden dort fliegend an Wellenstummeln gelagert und sind demzufolge exakt aufeinander ausrichtbar. Der Antrieb der Rollmesser erfolgt über ein unterhalb des unteren Rollmessers auf einer Hauptwelle aufgesetzten Zahnrads, welches in Eingriff steht mit einem Zahnrad, welches koaxial zum Rollmesser auf der Welle des letzteren befestigt ist. Das obere Rollmesser wird über einen Transportring reibschlüssig vom unteren Rollmesser angetrieben. Ein absoluter Gleichlauf der beiden Rollmesser ist wegen des Schlupfs nicht gewährleistet.
In der DE 27 18 777 wird eine Schneideinrichtung zum Schneiden von Papier mittels zwei Schneidrädern offenbart, die ebenfalls in festem gegenseitigem Abstand zueinander gelagert sind. Die beiden Schneidräder werden durch Reibschluss von einem Reibrad, welches in Kontakt mit einem Reibring am unteren Schneidrad steht, angetrieben. Mit dem Reibring am unteren Schneidmesser, der den Übertrieb vom Reibradantrieb auf das untere Schneidmesser bewirkt, wird auch das obere Schneidrad angetrieben. Dies hat zur Folge, dass sowohl der Antrieb des unteren Schneidrads mittels Reibschluss vom Reibradantrieb als auch der Übertrieb auf das obere Schneidrad mit Schlupf erfolgt und folglich ein Werkstück, hier Papier, nicht durch einen festen Vorschub zwischen den beiden Schneidrädern hindurchgeführt werden kann, weil keine der drei Vorschubbewegungen (Papiervorschub, Vorschub durch das untere Schneidrad und Vorschub durch das obere Schneidrad) synchron laufen. Eine solche Vorrichtung ist, wie auch in der DE 27 18 777 beschrieben nur für Einzelschnitte in Papierbögen geeignet, nicht jedoch für eine industrielle Schneidtechnik von z.B. Blechtafeln geeignet.
Weiter ist aus dem Stand der Technik bekannt, paarweise zusammenwirkende Rollmesser für die Herstellung von gleichzeitig zu erzeugenden parallelen Schnitten auf Antriebswellen zu befestigen. Bei solchen Scheren ist das Umstellen auf neue Schnittbreiten zwischen den einzelnen Messern sehr aufwendig, da sowohl die unteren als auch die oberen Rollmesser auf den Antriebswellen verschoben werden müssen und folglich nach dem Verschieben eine Justierung der jeweils zusammenwirkenden Messer im hundertstel Millimeterbereich von Hand durchgeführt werden muss. Ein weiterer Nachteil solcher Scheren besteht darin, dass die gesamten Schneidkräfte, welche radial auf die Rollmesser wirken, von den Antriebswellen getragen werden müssen. Eine Abstützung der beiden Antriebswellen in vernünftigen axialen Abständen, vorzugsweise zwischen den einzelnen Rollmesserpaaren, ist aus technischen Gründen nicht möglich, da sonst eine axiale Verschiebung zur Breiteneinstellung der zu erzeugenden Streifen nur beschränkt möglich ist.
In der WO 03/039795 die eine Schere gemäß dem Oberbegriff des Anspruchs 1 offenbart, wird eine CNC-Bahnschlitzmaschine beschrieben, die im Wesentlichen mit der oben beschriebenen übereinstimmt, wobei jedoch zur Abstützung der Schneidkräfte die oberen und die unteren die Messerhalter tragenden Rahmen zur axialen Führung Schienen aufweisen, in welchen die unteren und die oberen Messerhalter unabhängig axial verschiebbar sind. Die beiden Rahmen sind durch ein seitlich angeordnetes Gelenk, mit dem der radiale Abstand der oberen und der unteren Schneidmesser einstellbar ist, schwenkbar. Dadurch muss nach jeder neuen Breiteneinstellung auch der radiale Abstand zwischen den beiden Antriebswellen bzw. den Peripherien der Schneidmesser nicht nur radial, sondern auch in axialer Richtung neu eingestellt werden. Die Aufgabe der vorliegenden Erfindung besteht nun darin, eine Schere zu schaffen, welche die oben angeführten Nachteile nicht aufweist und einen einfachen und stabilen Aufbau aufweist.

Gelöst wird diese Aufgabe durch eine Schere mit den Merkmalen des Patentanspruchs 1. Vorteilhafte Ausgestaltungen der Schere sind in den abhängigen Ansprüche umschrieben.

Es gelingt mit der erfindungsgemässen Schere einerseits die auf die Rollmesser einwirkenden Kräfte über wesentlich grösser dimensionierte Wälzlager aufzunehmen und dadurch deren Standzeit zu vergrössern. Der Durchmesser der Rollmesser kann im Wesentlichen frei bestimmt werden. Weiter ist die Umrüstung auf andere Blechzuschnitt-Dimensionen sehr einfach, weil die Rollmesser zusammen mit den Lagerböcken entlang der Antriebswellen, die eine Königswelle darstellt, welche als gemeinsamer Antrieb aller nebeneinander angeordneten Rollmesser dient, leicht verschoben werden können. Die Antriebswelle dient einzig der Drehmomentübertragung und es wirken keine Kräfte, wie z.B. radiale Kräfte, wie dies im Stand der Technik der Fall ist. Im Weiteren ist der Schnittwinkel durch den wesentlich grösseren Durchmesser von z.B. ca. 160 mm statt 65 mm der Rollmesser wesentlich flacher und es können dadurch sogenannte Bogenschnitte vermieden werden.

Ein weiterer Vorteil der erfindungsgemässen Rollschere besteht darin, dass einerseits eine hohe Genauigkeit bei der Einstellung der zusammenwirkenden Rollmesser möglich ist, da beide in einem gemeinsamen Lagerbock gelagert sind und andererseits zur Übertragung des Drehmoments der beiden Antriebswellen auf die Rollmesser keine hohe Präzision notwendig ist, weil die Antriebswellen nur Momente übertragen müssen, jedoch keine Auswirkungen auf den Rundlauf der Rollmesser haben und keine radial wirkenden Kräfte von den Rollmessern aufnehmen müssen. Die Drehmomentübertragung mit Mitnehmerscheiben begünstigt die Herstellungskosten und die Montage der Rollmesser enorm.

Anhand eines illustrierten Ausführungsbeispiels wird die Erfindung näher erläutert. Es zeigen:
- Figur 1: einen axial verlaufenden Schnitt durch zwei übereinander angeordnete zusammenwirkende Rollmesser und die dazu gehörigen miteinander verbundenen Lagerböcke,
- Figur 2: eine Ansicht der beiden Rollmesser in axialer Richtung (Pfeil X) in Figur 1,
- Figur 3: eine Ansicht der beiden Rollmesser aus Richtung Pfeil Y in Figur 2,
- Figur 4: eine Ansicht der beiden Rollmesser in axialer Richtung (Pfeil X) in Figur 1 mit Mitnehmerscheiben,
- Figur 5: einen axial verlaufenden Schnitt durch die beiden Rollmesser mit Mitnehmerscheiben.

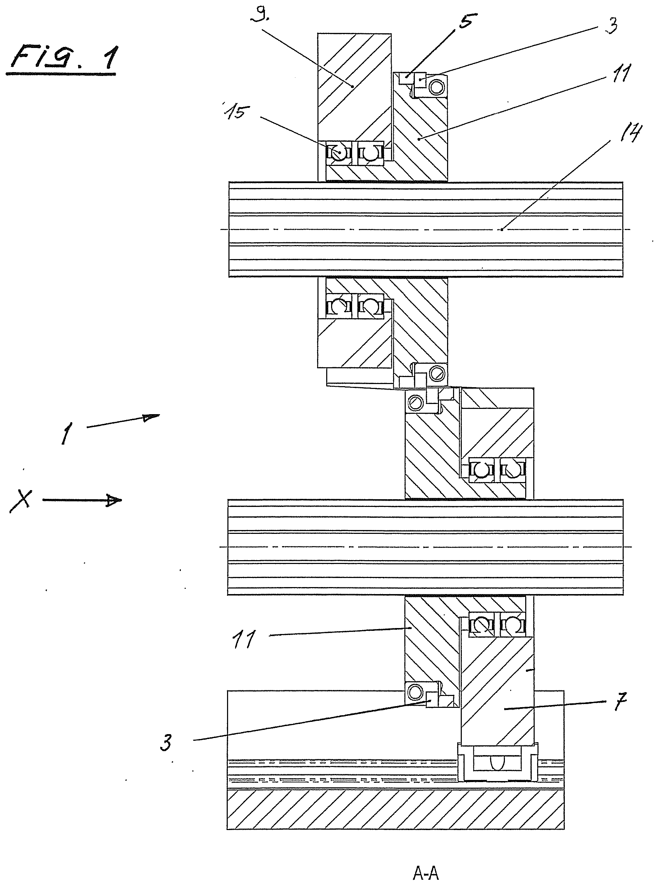

In der Darstellung in Figur 1 ist mit Bezugszeichen 1 eine Schere, umfassend zwei Rollmesser 3 mit je einem daran befestigten oder mit diesem verbundenen Transportring 5 sowie einem unteren Lagerbock 7 und einem oberen Lagerbock 9 ersichtlich. Weiter ist je eine Antriebsscheibe 11 dargestellt, welche das ringförmige Rollmesser 3 trägt. Im Zentrum der Antriebsscheibe 11 ist eine Bohrung 13, im Beispiel eine Bohrung mit Keilnuten für eine Antriebswelle 14, z.B. eine Mehrkant-, Polygon- oder Keilnutenwelle, sichtbar.
An den Lagerböcken 7,9 sind die Mehrkantbohrungen 13 sichtbar sowie Wälzlager 15, welche die Antriebsscheiben 11 einseitig radial umfassen. Der Durchmesser der Antriebsscheiben 11 ist innerhalb des Wälzlagers 15 somit kleiner als auf der gegenüberliegenden Seite, wo auf der Peripherie der Antriebsscheiben 11 die Rollmesser 3 getragen werden.
Zwischen den beiden Lagerböcken 7 und 9 ist eine Verbindungsschiene 17 und eine Leitschiene 18 sichtbar. Die Verbindungsschiene 17 dient dazu, die beiden Lagerböcke 7 starr miteinander zu verbinden. Die Verbindungsschiene 17 ist mit Schrauben 19 und 21 an den beiden Lagerböcken 7 bzw. 9 befestigt. Die beiden Lagerböcke 7,9 und die Verbindungsschiene 17 können auch einstückig, z.B. als Gussteil, hergestellt sein. Die Leitschiene 18 führt eine ungeschnittene Blechtafel (nicht dargestellt) zwischen die beiden Rollmesser 3.

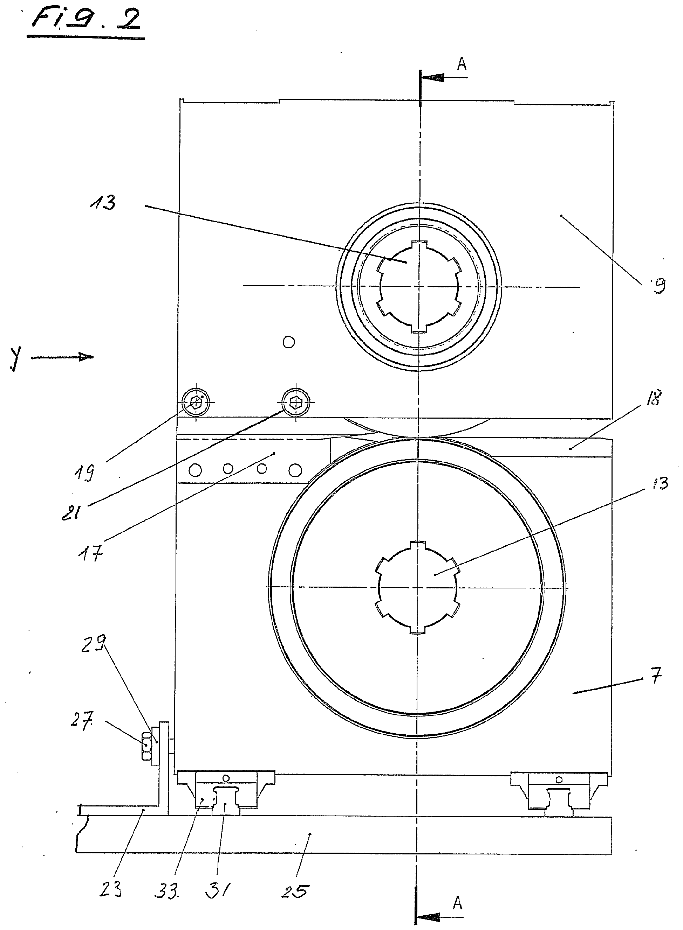

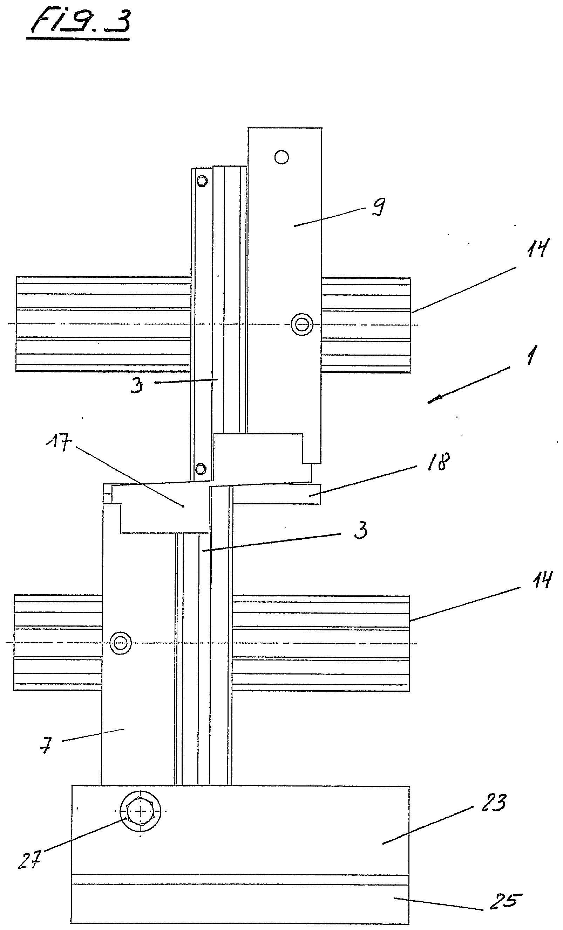

In Figur 3, welche die Rollschere 1 aus Richtung des Pfeils Y in Figur 2 zeigt, ist unten eine Referenzschiene 23 ersichtlich, welche auf einer Grundplatte 25 befestigt ist. Zwischen einem nach oben ragenden Schenkel der Referenzschiene 23 und dem unteren Lagerbock 7 ist eine Positionierschraube 27 mit einer Scheibe 29 eingesetzt, mit welchen die Rollschere 1 an gewünschter Stelle längs den Linearführungsschienen 31 positioniert und dort festgestellt werden kann. Eine Linearführung, z.B. ein Führungswagen 33 oder ein Gleitschlitten, ermöglicht eine spielfreie Führung der mindestens einen Rollschere 1 entlang der Antriebswelle 14. Alternativ kann die Linearführung 33 eine Bohrung durch einen der Lagerböcke 7,9 umfassen, durch welche Bohrung eine Führungsstange hindurchführt (keine Abbildung).
Die beiden Rollmesser 3 werden synchron von den beiden Antriebswellen 14, welche als Königswellen für eine Vielzahl von nebeneinander angeordneten Rollscheren 1 fungieren, angetrieben. Zudem werden die beiden Antriebswellen 14 an jeder Rollschere 1 von den beiden Rollmessern 3 abgestützt, weil die Rollmesser 3 bzw. die Antriebsscheibe 11 von den Lagerböcken 7,9 getragen werden. Die Antriebsscheiben 11 sind ihrerseits von Wälzlagern 15 frei drehbar getragen. Dies ermöglicht es, Blechtafeln grosser Breite mit einer Mehrzahl von entlang der Antriebswellen 14 angeordneten Rollscheren 1 in eine entsprechend grosse Anzahl nebeneinanderliegende Streifen aufzutrennen. Die Änderung der Breite der zu erzeugenden Blechstreifen erfolgt durch Verschieben der Rollmesser 3 entlang der Führungsschienen 31. Die Positionierung an der neuen Arbeitsposition kann durch auf der Referenzschiene 23 angebrachte Positionierbohrungen oder eine Massschiene erfolgen. Ein gegenseitiges Ausrichten der Rollmesser 3 nach einer axialen Verstellung der Rollschere 1 ist nicht nötig, da deren Position sich beim Verschieben entlang der Führungsschiene 31 nicht ändern kann.

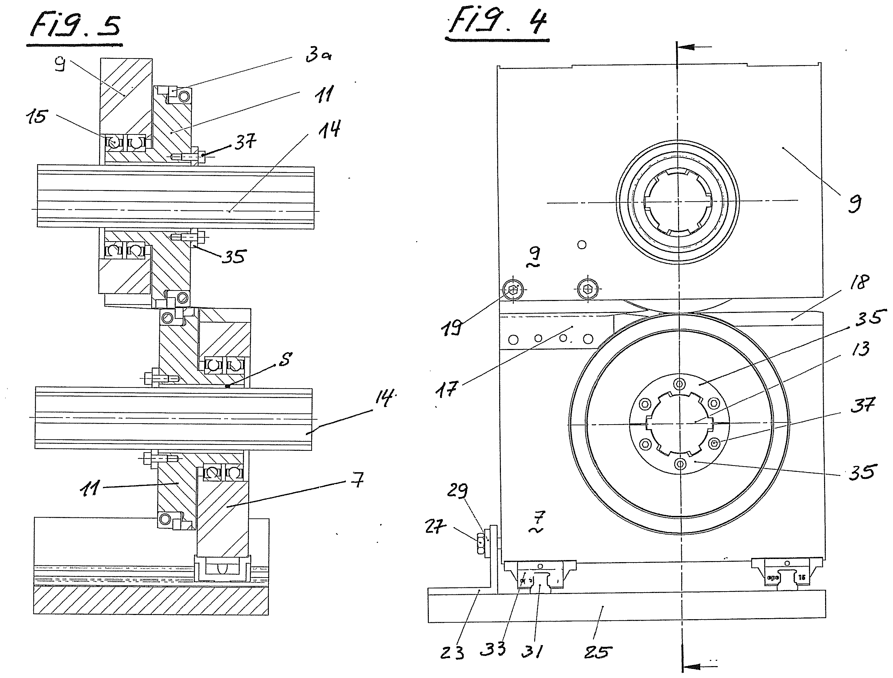

In einer weiteren vorteilhaften Ausgestaltung der Erfindung gemäss den Figuren 4 und 5 erfolgt die Drehmomentübertragung von der Antriebswelle 14 nicht über eine Mehrkantbohrung 13, wie in Figur 2 dargestellt, sondern mit einer Mitnehmerscheibe 35, welche stirnseitig an der Antriebsscheibe 11 befestigt ist. Die Befestigung der Mitnehmerscheibe 35 erfolgt durch Schrauben 37. Vorzugsweise ist die Mitnehmerscheibe 35 zweiteilig ausgebildet. Dies ermöglicht es, bei der Montage der Schere die formschlüssige Verbindung zwischen der Antriebswelle bzw. den Antriebswellen 14 und den Antriebsscheiben 11 erst nach dem Hindurchführen der Antriebswellen 14 durch die Antriebsscheiben 11 anzubringen. Ein weiterer Vorteil einer Verwendung einer Mitnehmerscheibe 35, ein- oder mehrteilig, besteht darin, dass deren Herstellung, z.B. durch Erodieren oder Schneiden mit Laser wesentlich kostengünstiger ist als die Herstellung einer Mehrkantbohrung 13, welche die Antriebsscheibe 11 durchdringt. In der Antriebsscheibe 11 ist folglich in dieser Ausgestaltung nur eine zylindrische Bohrung anzubringen, deren Durchmesser grösser ist als der Durchmesser der Antriebswelle 14 (siehe Spalt oder Spiel S in Figur 5). Möglich wird diese vorteilhafte Ausgestaltung mit Mitnehmerscheiben 35 dadurch, dass zwischen der Antriebswelle 34 und der Antriebsscheibe 11 nur eine Drehmomentübertragung erfolgen muss. Es wirken keine radialen Kräfte, wie dies beim Schneiden von Werkstücken mit zwei Rollmessern üblicherweise der Fall ist. Das Einführen einer Antriebswelle 14 in eine zylindrische Bohrung, deren Durchmesser grösser ist als der Durchmesser der Antriebswelle 14, vereinfacht weiter die Montage, wenn mehrere Rollscheren 1 auf die Antriebswellen 14 aufgeschoben werden müssen.

Im Betrieb werden die Blechplatten, welche in Streifen geschnitten werden sollen, in der Figur 2 von rechts nach links den Rollmessern 3 zugeleitet. Die dazu benötigten Transportmittel bzw. Transportbahnen, welche die Bleche tragen und fördern, sind der Übersichtlichkeit halber nicht dargestellt und auch nicht Teil der Schere 1 selbst.

### Legende der Bezugszeichen

- 1: Rollschere
- 3: Rollmesser
- 5: Transportring
- 7: Lagerbock unten
- 9: Lagerbock oben
- 11: Antriebsscheibe
- 13: Mehrkantbohrung
- 14: Antriebswelle
- 15: Wälzlager
- 17: Verbindungsschiene
- 18: Leitschiene
- 19: Schrauben
- 21: Schrauben
- 23: Referenzschiene
- 25: Grundplatte
- 27: Positionierschraube
- 29: Scheibe
- 31: Schienen
- 33: Führungswagen
- 35: Mitnehmerscheibe
- 37: Schrauben

## Patentansprüche

1. Schere zum Anfertigen von Blechzuschnitten aus Blechtafeln oder Blechbändern, umfassend mindestens zwei zusammenwirkende Rollmesser mit zueinander parallel liegenden Drehachsen, wobei jedes Rollmesser (3) auf der Peripherie einer Antriebsscheibe (11) angeordnet ist und jede Antriebsscheibe (11) in einem Lagerbock (7,9) drehbar gelagert ist und von den Lagerböcken (7,9) getragen wird, **dadurch gekennzeichnet, dass** die beiden Lagerböcke (7,9) übereinander und seitlich zueinander versetzt angeordnet und durch eine Verbindungsschiene (17) miteinander verbunden sind und wobei die Antriebsscheiben (11) und Rollmesser (3) im oberen Lagerbock (9) und die Antriebseinheiten (11) und Rollmesser (3) im unteren Lagerbock (7) von Antriebswellen (14) durchsetzt und auf diesen gemeinsam axial verschiebbar sind und zur Drehmomentübertragung in formschlüssiger Verbindung mit den Antriebswellen (14) stehen.

2. Schere nach Anspruch 1, **dadurch gekennzeichnet, dass** der untere und/oder der obere Lagerbock (7,9) auf einer Linearführung (33) befestigt und mit dieser zur Ein- und Verstellung der Breite der Zuschnitte auf einer Führungsschiene oder -stange (31) achsparallel verschiebbar ist.

3. Schere nach Anspruch 2, **dadurch gekennzeichnet, dass** auf der Führungsschiene (31) als Linearführung ein Führungswagen (33) positionier- und feststellbar gehalten ist.

4. Schere nach Anspruch 3, **dadurch gekennzeichnet, dass** die Lagerböcke (7,9) mit einer Mehrzahl von Rollmessern (3) nebeneinander auf der Führungsschiene (31) angeordnet sind und von den zwei Antriebswellen (14) durchsetzt und deren Antriebsscheiben (11) von den Antriebswellen (14) angetrieben werden.

5. Schere nach einem der Ansprüche 1 bis 4, **dadurch gekennzeichnet, dass** die beiden Antriebswellen (14) synchron antreibbar sind.

6. Schere nach einem der Ansprüche 1 bis 5, **dadurch gekennzeichnet, dass** die formschlüssige Drehmomentübertragung von den Antriebswellen (14) auf die Antriebsscheiben (11) über Mehrkant-, Polygon- oder Keilnutbohrungen (13) in den Antriebsscheiben (11) erfolgt.

7. Schere nach einem der Ansprüche 1 bis 5, **dadurch gekennzeichnet, dass** die formschlüssige Drehmomentübertragung von den Antriebswellen (14) auf die Antriebsscheiben (11) über auf der Stirnfläche der Antriebsscheiben (11) aufgesetzte und mit dieser formschlüssig verbundenen Mitnehmerscheiben (35) erfolgt.

8. Schere nach einem der Ansprüche 1 bis 7, **dadurch gekennzeichnet, dass** die Antriebswellen (14) Mehrkant-, Polygon- oder Keilnutenwellen sind.

## Claims

1. Shears in order to produce sheet-metal blanks made of sheet-metal plates or sheet-metal strips, comprising at least two interacting roller cutters having rotational axes parallel to one another, wherein each roller cutter (3) is arranged on the periphery of a drive disk (11) and each drive disk (11) is rotatably mounted in a bearing block (7,9) and is supported by the bearing blocks (7,9), **characterized in that** the two bearing blocks (7,9) are arranged above one another and laterally offset from one another and are connected to one another by means of a connecting rail (17), and wherein the drive disks (11) and roller cutters (3) are interspersed in the upper bearing block (9) and the drive units (11) and roller cutters (3) are interspersed in the lower bearing block (7) of drive shafts (14) and are jointly axially displaceable on said drive shafts and are positively connected to the drive shafts (14) in order to transmit the torque.

2. The shears according to Claim 1, **characterized in that** the lower and/or the upper bearing block (7,9) is/are mounted on a linear guide (33) and can be displaced in an axially parallel manner with said linear guide on a guide rail or guide rod (31) in order to set and adjust the width of the blanks.

3. The shears according to Claim 2, **characterized in that** a guide carriage (33) is positionably and lockably held on the guide rail (31) as a linear guide.

4. The shears according to Claim 3, **characterized in that** the bearing blocks (7,9) having a plurality of roller cutters (3) are arranged next to one another on the guide rail (31) and interspersed by the two drive shafts (14), and the drive disks (11) thereof are driven by the drive shafts (14).

5. The shears according to any one of Claims 1 to 4, **characterized in that** the two drive shafts (14) can be driven synchronously.

6. The shears according to any one of Claims 1 to 5, **characterized in that** the torque is positively transmitted from the drive shafts (14) to the drive disks (11) by means of polygonal or wedge groove bores (13) in the drive disks (11).

7. The shears according to any one of Claims 1 to 5, **characterized in that** the torque is positively transmitted from the drive shafts (14) to the drive disks (11) by means of driving plates (35) positioned on the end face of the drive disks (11) and positively connected to said end face.

8. The shears according to any one of Claims 1 to 7, **characterized in that** the drive shafts (14) are polygonal or wedge groove shafts.

## Revendications

1. Cisaille pour la réalisation de tôles découpées à partir de feuilles de tôle ou de bandes de tôle, comprenant au moins deux couteaux rotatifs coopérants avec des axes de rotation parallèles l'un à l'autre, chaque couteau rotatif (3) étant disposé sur la périphérie d'une poulie d'entraînement (11) et chaque poulie d'entraînement (11) étant montée de façon rotative dans un support de palier (7, 9) et étant supportée par les supports de palier (7, 9), **caractérisée en ce que**
les deux supports de palier (7, 9) sont disposés l'un au-dessus de l'autre et de façon décalée latéralement l'un par rapport à l'autre et sont reliés entre eux par un rail de liaison (17), et les poulies d'entraînement (11) et les couteaux rotatifs (3) dans le support de palier supérieur (9), et les unités d'entraînement (11) et les couteaux rotatifs (3) dans le support de palier inférieur (7),
étant munis d'arbres d'entraînement (14) et étant déplaçables ensemble de façon axiale et étant reliés par liaison de forme avec les arbres d'entraînement (14) pour la transmission du couple de rotation.

2. Cisaille selon la revendication 1, **caractérisée en ce que** le support de palier inférieur et/ou supérieur (7, 9) sont fixés sur un guide linéaire (33) et **en ce qu'**ils sont déplaçables de façon parallèle à l'axe pour le réglage et l'ajustement de la largeur des tôles sur un rail ou une tige de guidage (31).

3. Cisaille selon la revendication 2, **caractérisée en ce qu'**un chariot de guidage (33) est maintenu de façon positionnable et bloquable sur le rail de guidage (31), en tant que guide linéaire.

4. Cisaille selon la revendication 3, **caractérisée en ce que** les supports de palier (7, 9) sont disposés l'un à côté de l'autre sur le rail de guidage (31) avec une multiplicité de couteaux rotatifs (3) et sont munis des deux arbres d'entraînement (14) et **en ce que** leurs poulies d'entraînement (11) sont entraînées par les arbres d'entraînement (14).

5. Cisaille selon l'une quelconque des revendications 1 à 4, **caractérisée en ce que** les deux arbres d'entraînement (14) peuvent être entraînés de manière synchrone.

6. Cisaille selon l'une quelconque des revendications 1 à 5, **caractérisée en ce que** la transmission du couple de rotation par liaison de forme par les arbres d'entraînement (14) aux poulies d'entraînement (11) est effectuée par des alésages à plusieurs côtés, polygonaux ou à rainure de clavetage dans les poulies d'entraînement.

7. Cisaille selon l'une quelconque des revendications 1 à 5, **caractérisée en ce que** la transmission du couple de rotation par liaison de forme par les arbres d'entraînement (14) aux poulies d'entraînement (11) est effectuée par des disques entraîneurs (35) disposés sur la surface frontale des poulies d'entraînement (11) et reliés à celles-ci par liaison de forme.

8. Cisaille selon l'une quelconque des revendications 1 à 7, **caractérisée en ce que** les arbres d'entraînement (14) peuvent être des arbres à plusieurs côtés, polygonaux ou à rainures de clavetage.
